Europäisches Patentamt

European Patent Office

Office européen des brevets

(11) Numéro de publication: **0 046 118**

**A2**

## (12) DEMANDE DE BREVET EUROPEEN

(21) Numéro de dépôt: **81401274.6**

(51) Int. Cl.³: **H 04 N 1/18**

(22) Date de dépôt: **06.08.81**

(30) Priorité: **13.08.80 FR 8017905**

(43) Date de publication de la demande:
**17.02.82 Bulletin 82/7**

(84) Etats contractants désignés:
**BE DE GB IT NL**

(71) Demandeur: **MATRA**
**4 rue de Presbourg**
**F-75116 Paris(FR)**

(72) Inventeur: **Lavis, Alain**
**24, rue Jean-Jaurès**
**F-78640 Villiers Saint Frederic(FR)**

(74) Mandataire: **Michardière, Bernard et al,**
**Cabinet Plasseraud 84, rue d'Amsterdam**
**F-75009 Paris(FR)**

(54) Procédé et dispositif d'analyse et/ou de restitution de documents.

(57) Procédé d'analyse et/ou de restitution de documents selon lequel on traite par des moyens d'analyse ou de restitution plusieurs lignes à la fois, dans un seul balayage suivant une direction X, et, après ce balayage, une translation relative est effectée entre le document et les moyens d'analyse ou de restitution suivant une direction Y transversale à la direction X, puis un nouveau balayage de plusieurs lignes suivantes a lieu et ainsi de suite, ce procédé étant prévu pour analyser ou restituer p points suivant chaque ligne.

On effectue chaque balayage suivant une largeur de n.k lignes; à chaque balayage on traite p/k points par ligne; la translation suivant la direction Y, entre deux balayages successifs, a une amplitude correspondant à n lignes et, à chaque balayage, on traite des points qui sont décalés par rapport aux points du balayage précédent d'une distance i/k suivant la direction X, i étant la distance qui sépare deux points successifs d'une ligne divisée en p/k points.

Fig.2.

## Procédé et dispositif d'analyse et/ou de restitution de documents.

L'invention est relative à un procédé d'analyse et/ou de restitution de documents, procédé du genre de ceux selon lesquels on traite par des moyens d'analyse ou de restitution plusieurs lignes à la fois, dans un seul balayage suivant une direction X, et, après ce balayage, une translation relative est effectuée entre le document et les moyens d'analyse ou de restitution suivant une direction Y transversale, notamment orthogonale, à la direction X, puis un nouveau balayage de plusieurs lignes suivantes a lieu, et ainsi de suite, ce procédé étant prévu pour analyser ou restituer p points suivant chaque ligne.

L'invention concerne également un appareil pour la mise en oeuvre d'un tel procédé.

La demande de brevet FR.N° 2 390 866 (77 14 643) déposée le 13 mai 1977   concerne un appareil mettant en oeuvre un procédé du genre en question.

L'invention a pour but, surtout, de rendre le procédé tel qu'il réponde mieux que jusqu'à présent aux diverses exigences de la pratique et notamment tel que ses performances soient améliorées.

Selon l'invention, un procédé d'analyse et/ou de restitution de documents du genre défini précédemment est caractérisé par le fait que l'on effectue chaque balayage suivant une largeur de n.k lignes, qu'à chaque balayage on traite p/k points par ligne, que la translation suivant la direction Y, entre deux balayages successifs, a une amplitude correspondant à n lignes et que, à chaque balayage, on traite des points qui sont décalés par rapport aux points du balayage précédent d'une distance i/k suivant la direction X, i étant la distance qui sépare deux points successifs d'une ligne divisée en p/k points.

De préférence, k = 2.

Un appareil pour la mise en oeuvre du procédé comprend des moyens d'analyse ou de restitution comportant des organes d'analyse ou de restitution élémentaires disposés transversalement, notamment orthogonalement à la direction X, un dispositif d'entraînement pour faire balayer, par ces moyens d'analyse, le document et des moyens pour déplacer pas à pas l'un par rapport à l'autre le document et les moyens d'analyse suivant la direction Y, entre deux balayages; un tel appareil, selon l'invention, est caractérisé par le fait que les moyens de déplacement pas à pas sont agencés pour assurer des pas de déplacement dont l'amplitude correspond à $\underline{n}$ lignes; que les moyens d'analyse ou de restitution comportent n . k organes élémentaires, chaque organe élémentaire correspondant à une ligne ; et qu'il comporte des moyens de commande propres à faire traiter, à chaque balayage, p/k points par lignes, ces moyens de commande étant agencés pour décaler, suivant la direction X, les points de chaque balayage suivant par rapport aux points du balayage précédent d'une distance i/k suivant la direction X, $\underline{i}$ étant la distance qui sépare deux points successifs d'une ligne divisée en p/k points.

3

L'invention consiste, mises à part les dispositions exposées ci-dessus, en certaines autres dispositions
dont il sera plus explicitement question ci-après à propos
d'un mode de réalisation particulier décrit avec référence
aux dessins ci-annexés, mais qui n'est nullement limitatif.

La figure 1, de ces dessins, est un schéma
représentant, partiellement, les positions des points traités après analyse ou restitution complète.

La figure 2 est un schéma illustrant le procédé
d'analyse ou de restitution, selon l'invention, dans le
cas où k = 2.

La figure 3 est un schéma de moyens de restitution.

La figure 4 est un schéma d'une variante des
moyens de restitution.

La figure 5 est un schéma d'un appareil pour
la mise en oeuvre du procédé de l'invention.

La figure 6, enfin, est un schéma synoptique
d'une partie des moyens de commande.

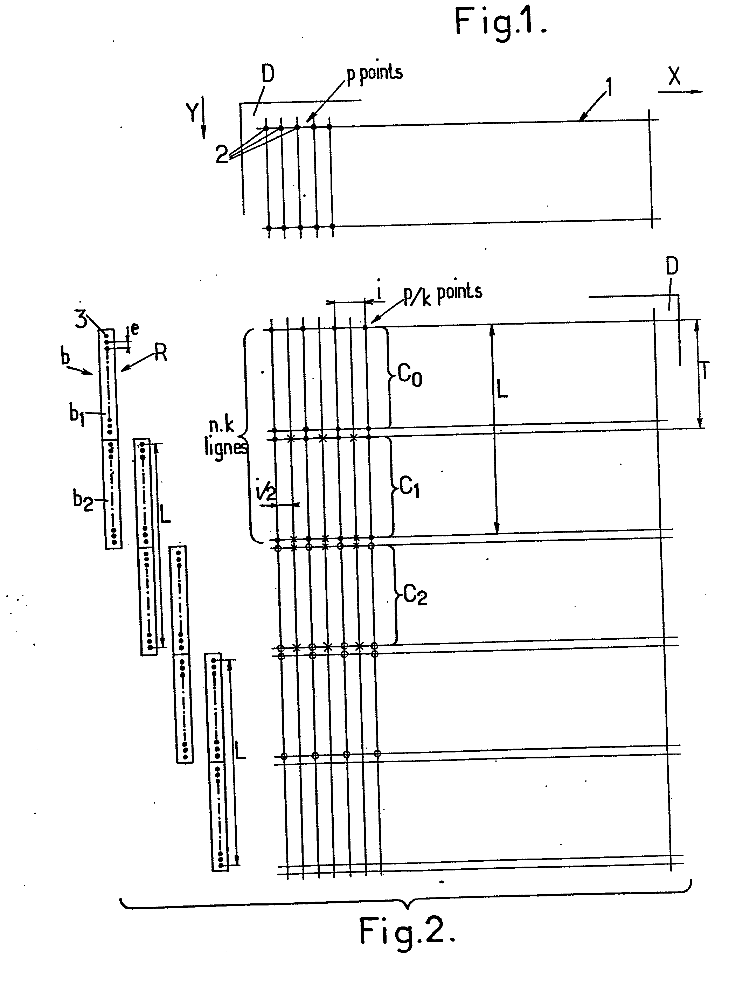

En se reportant à la figure 1, on peut voir
un schéma des positions géométriques des points d'un
document D analysés ou restitués. Suivant une ligne 1 du
document orientée suivant une direction X, p points 2
sont analysés ou restitués. Pour simplifier les explications, on envisagera, par la suite, essentiellement le cas
de la restitution. Il est clair, cependant, que les explications restent valables moyennant des adaptations immédiates, au cas de l'analyse.

Sur la figure 1, toutes les positions géométriques des points 2 ont été représentées par des points
noirs.

Toutefois, les points 2 qui se succèdent ont
des couleurs différentes de manière à restituer des informations écrites ou dessinées. Par exemple, les points
2 sont noirs ou blancs.

En outre, l'écartement entre les points successifs a été accentué dans la représentation effectuée,

4 0046118

pour que le dessin reste lisible.

A titre d'exemple numérique, non limitatif, pour un format A4 dont la largeur suivant la direction X est de 210 mm, on peut prévoir 1728 points restitués suivant une ligne parallèle à X.

Les moyens de restitution R, schématiquement représentés sur les figures 2 à 4, sont propres à traiter plusieurs lignes à la fois au cours de chaque balayage. Ces moyens de restitution comprennent des organes de restitution élémentaires 3 constitués, notamment, par une barrette de diodes électroluminescentes (DELS), ces diodes étant alignées suivant une direction Y orthogonale à la direction X. De tels moyens de restitution sont utilisés avec un papier photo-sensible de telle sorte que l'allumage d'une diode permet d'inscrire un point noir sur le papier. Il est clair que l'on pourrait utiliser d'autres moyens de restitution, par exemple des points chauffants qui agiraient sur un papier thermosensible, ou des dispositifs à projection d'encre ou tout moyen d'inscription équivalent.

Dans le cas de l'analyse d'un document, les moyens d'analyse comporteraient des organes d'analyse élémentaires tels que des détecteurs photosensibles (photodiode notamment) dont la disposition serait semblable à celle décrite pour la restitution.

Les balayages actifs, c'est-à-dire au cours desquels la restitution a lieu, peuvent être exécutés tous dans le même sens, par exemple de gauche à droite ; le retour des moyens de restitution R de droite à gauche est alors effectué sans restitution. Il est également possible de balayer successivement de gauche à droite et de droite à gauche avec restitution dans les deux sens.

Entre chaque balayage actif, une translation relative, correspondant à un pas, est effectuée suivant la direction Y, entre le document D et les moyens de restitution R, puis un nouveau balayage de plusieurs lignes suivantes a lieu, et ainsi de suite.

Selon l'invention, comme montré sur la fig. 2, on effectue chaque balayage suivant une largeur correspondant à n.k lignes, n et k étant des nombres entiers. Les moyens de restitution R comportent, alors, n.k organes de restitution élémentaires 3, chaque organe correspondant à une ligne 1.

Dans la pratique, les moyens de restitution R peuvent être réalisés soit à l'aide d'une seule barrette de nk éléments, soit à l'aide de k barrettes dont la grande dimension est orientée suivant la direction Y, ces barrettes étant juxtaposées ; chaque barrette comporte n organes de restitution élémentaires 3. La distance e entre les organes élémentaires 3 est constante.

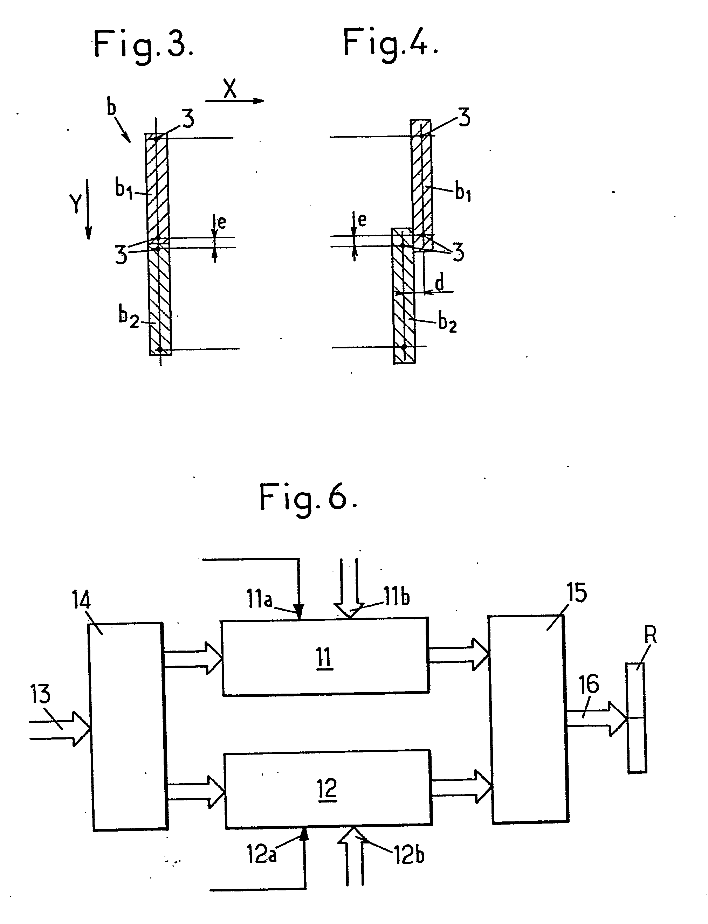

Sur la figure 3, on a représenté une première solution selon laquelle les barrettes b sont disposées bout-à-bout par leur petite extrémité, les organes élémentaires 3 des barrettes successives étant alignés.

Toutefois, il est possible qu'en raison de la faible distance e, par exemple de l'ordre de 0,2 mm, entre deux organes 3, des difficultés pratiques empêchent une telle juxtaposition ; en particulier, la somme des distances marginales séparant, sur chaque barrette, le dernier organe de la rangée, de l'extrémité voisine de la barrette peut être supérieure à cette distance e.

Sur la figure 4, on a représenté une deuxième solution possible dans laquelle les deux barrettes b1, b2 sont juxtaposées suivant une zone d'extrémité d'un de leurs bords longitudinaux, et de telle sorte que la distance e suivant la direction Y, soit respectée entre le dernier organe 3 de la barrette b1 et le premier organe 3 de la barrette b2. Les deux rangées d'organes 3 sont alors décalées suivant la direction X d'une distance d.

On choisit avantageusement k = 2, ce qui correspond à la représentation des figures 2 à 4.

A titre d'exemple, non limitatif, on peut choisir n = 16 de telle sorte que les moyens de restitution R comprennent 16 . 2 = 32 organes élémentaires 3 ;

ainsi, chaque balayage sera effectué suivant une largeur de 32 lignes, ce qui correspond, par exemple, à environ 8,3 mm.

Soit p le nombre de points restitués suivant chaque ligne ; on traite, à chaque balayage, seulement p/k points par lignes. Les nombres sont choisis de telle sorte que p/k soit un nombre entier.

Dans le mode de réalisation avantageux où k = 2, p est donc un nombre pair.

La translation, suivant la direction Y, entre deux balayages successifs a une amplitude T (fig. 2) correspondant seulement à n lignes. On voit immédiatement que cette amplitude T n'est qu'un sous-multiple de la largeur de balayage qui correspond à n.k lignes. L'amplitude T est égale ou sensiblement égale à L/K, L étant la largeur de balayage.

Dans le cas avantageux où k = 2, T est égal à la moitié de L.

A chaque balayage, on traite des points qui sont décalés, par rapport aux points du balayage précédent, d'une distance i/k, suivant la direction X, i (voir fig. 2) étant la distance qui sépare deux points successifs d'une ligne divisée en p/k points.

On a représenté, par des points noirs, les positions géométriques des points restitués lors du premier balayage.

Les positions géométriques des points restitués, lors du second balayage, ont été représentées par des croix. On voit que ces croix sont situées sur des parallèles à la direction Y intercalées entre les positions géométriques des points restitués lors du premier balayage.

Le décalage suivant la direction X entre les points traités lors du 2ème balayage et les points traités lors du premier balayage est égal à i/2.

Les positions géométriques des points restitués lors du troisième balayage ont été représentées par des petits cercles décalés, suivant la direction X, de la distance $i/2$ par rapport aux croix représentant les positions géométriques pour le 2ème balayage.

De ce fait, les positions géométriques des points traités lors de ce troisième balayage seront situées sur les mêmes parallèles à la direction Y que les points traités lors du premier balayage.

Pour faciliter les explications, en se limitant à $k = 2$, on voit que des bandes successives $C_0$, $C_1$, $C_2$, correspondant à n lignes sont restituées.

La deuxième bande $C_1$ ainsi que les bandes suivantes résultent de deux balayages ; le deuxième de ces balayages traite des points dont les positions géométriques sont situées entre celles du premier balayage. Finalement, chaque ligne de la bande $C_1$ et des bandes suivantes balayées deux fois comportera $p/2 \cdot 2 = p$ points traités.

Seule la première bande $C_0$ ainsi que la dernière comportera n lignes à $p/2$ points traités.

La largeur de la bande $C_0$ (comme celle de la dernière bande) est réduite, par exemple de l'ordre de 4,1 mm et peut être facilement éliminée, par exemple si elle correspond à la marge supérieure ou inférieure du document.

Les explications précédentes moyennant quelques adaptations immédiates, restent valables pour k quelconque.

Le procédé de l'invention est particulièrement intéressant car il permet d'augmenter les performances des appareils fonctionnant selon ce procédé.

En effet, soit p le nombre de points à restituer par ligne à une vitesse déterminée.

L'inscription de ces p points est assurée par un seul organe élémentaire 3 déplacé, lors du balayage, suivant la ligne en question.

Or, l'énergie moyenne qui peut être dissipée par l'organe élémentaire 3 lors d'un tel balayage est imposée par la technologie actuelle et constitue une limitation gênante à la valeur de p.

Avec le procédé de l'invention, le nombre de points traités, lors de chaque balayage, par un organe élémentaire 3 est divisé par k de telle sorte que l'énergie moyenne dissipée au niveau de cet organe 3 est également divisée par k. Les contraintes liées à cette dissipation d'énergie se trouvent donc considérablement réduites.

Selon un autre aspect, à niveau d'énergie et de sensibilité de papier constante, on peut augmenter la vitesse de balayage.

Ces avantages subsistent quel que soit le type d'énergie employé à la restitution, et notamment en cas d'impression optique, sur papier photosensible, ou d'impression thermique sur papier thermosensible.

Les différents paramètres tels que vitesse de balayage, translation pas à pas, nombre d'organes élémentaires par barrette $\underline{b}$ (ou transducteur), sensibilité du papier et du transducteur, valeur de $\underline{k}$, sont choisis de manière à obtenir le meilleur compromis en fonction du problème traité.

Un autre résultat intéressant obtenu avec le procédé de balayage de l'invention réside dans la dilution de défauts périodiques pouvant intervenir par suite d'un écart entre, d'une part, l'amplitude du pas du déplacement relatif entre le document D et les moyens de restitution R et, d'autre part, la longueur correspondant à $\underline{n}$ organes élémentaires 3 de restitution.

Théoriquement, l'amplitude du pas est égale à la distance correspondant à $\underline{n}$ organes élémentaires 3.

Toutefois, il est inévitable, dans la réalisation pratique, qu'une différence subsiste entre ces deux longueurs. En outre, en cours de fonctionnement, des jeux peuvent intervenir ayant tendance à accroître cette différence.

L'écart produit par une telle différence entraîne un défaut périodique auquel l'oeil humain est très sensible.

Le procédé de balayage de l'invention, selon lequel il y a entrelacement des points successifs, permet de diluer ce défaut.

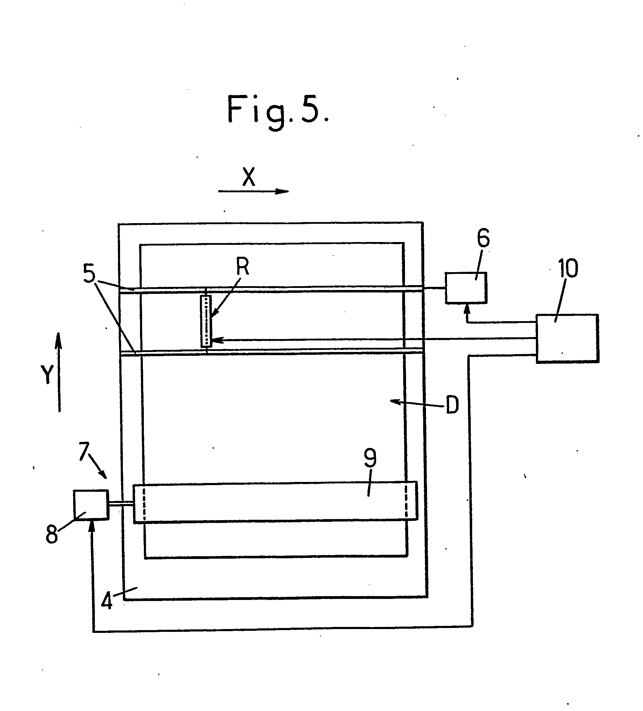

La figure 5 représente, schématiquement, un appareil pour la mise en oeuvre du procédé.

Cet appareil comprend un bâti 4 sur lequel sont montés des moyens de guidage 5 pour le déplacement des moyens de restitution R. Ces moyens de guidage peuvent être formés par des rails parallèles à la direction X. Des moyens d'entraînement 6, notamment formés par un moteur électrique entraînant en rotation des moyens de transformation du mouvement rotatif en mouvement linéaire, sont prévus pour déplacer les moyens R suivant la direction X de gauche à droite et de droite à gauche. Des moyens 7 de déplacement pas-à-pas du document D par rapport aux moyens de restitution R, suivant la direction Y, sont en outre prévus. Ces moyens 7 peuvent, par exemple, comprendre un moteur électrique pas-à-pas 8 actionnant un rouleau d'entraînement 9 agissant sur le document D, pour le déplacer par rapport aux moyens R.

Les moyens de restitution R comportent n . k organes élémentaires 3, chaque organe élémentaire correspondant à une ligne 1 du document.

L'appareil comporte, en outre, des moyens de commande 10 propres à faire traiter, à chaque balayage, p/k points par ligne. Ces moyens de commande 10 envoient des ordres aux moyens de restitution R ainsi qu'au moteur 6, les ordres étant synchronisés. L'ensemble est tel que les points de chaque balayage sont décalés, suivant la direction X, par rapport aux points du balayage précédent, d'une distance i/k.

La partie des moyens de commande 10 qui envoie les instructions aux moyens de restitution R peut comprendre, comme représenté sur la figure 6, deux mémoires 11, 12. Dans le cas particulier envisagé où n = 16 et k = 2, ces mémoires comportent 32 lignes. Les commandes d'écriture ou de lecture sont effectuées sur une entrée 11a, 12a de

ces mémoires, tandis que l'adressage a lieu sur des entrées 11b, 12b.

Les informations à stocker dans les mémoires arrivent par une ligne 13 d'entrée sur un aiguillage 14 à une entrée et à deux sorties ; les deux sorties de cet aiguillage sont reliées respectivement aux entrées des mémoires 11 et 12.

Les sorties de ces mémoires sont reliées à deux entrées d'un autre aiguillage 15 comportant deux entrées et une sortie 16 reliée par un faisceau aux moyens de restitution R.

Les ordres envoyés sur les entrées 11a, 12a, sont prévus pour faire travailler en alterné les mémoires 11 et 12, c'est-à-dire que lorsque la mémoire 11 travaille en écriture (stockage des informations arrivant par la ligne 13 dans la mémoire 11), la mémoire 12 travaille en lecture et les informations stockées dans cette mémoire sont fournies par l'aiguillage 15 et la ligne 16 aux moyens de restitution R, et vice-versa.

Au niveau de la lecture d'une des mémoires, l'affectation des informations des lignes successives de cette mémoires aux barrettes $b_1$ ou $b_2$ des moyens de restitution R est assurée par l'adressage de la mémoire considérée.

## REVENDICATIONS

1. Procédé d'analyse et/ou de restitution de documents (D) selon lequel on traite par des moyens d'analyse ou de restitution plusieurs lignes (1) à la fois, dans un seul balayage suivant une direction X, et, après ce balayage, une translation relative est effectuée entre le document et les moyens d'analyse ou de restitution suivant une direction Y transversale, notamment orthogonale, à la direction X, puis un nouveau balayage de plusieurs lignes suivantes a lieu, et ainsi de suite, ce procédé étant prévu pour analyser ou restituer p points (2) suivant chaque ligne (1), caractérisé par le fait que l'on effectue chaque balayage suivant une largeur de n.k lignes, qu'à chaque balayage on traite p/k points (2) par ligne (1), que la translation (T) suivant la direction Y, entre deux balayages successifs, a une amplitude correspondant à n lignes et que, à chaque balayage, on traite des points qui sont décalés par rapport aux points du balayage précédent d'une distance i/k suivant la direction X, i étant la distance qui sépare deux points successifs d'une ligne divisée en p/k points.

2. Procédé selon la revendication 1, caractérisé par le fait que k = 2.

3. Procédé selon la revendication 1 ou 2, caractérisé par le fait que n = 16.

4. Appareil pour la mise en oeuvre d'un procédé selon l'une quelconque des revendications précédentes, comprenant des moyens d'analyse ou de restitution (R) comportant des organes d'analyse ou de restitution élémentaires disposés transversalement, notamment orthogonalement à la direction X, un dispositif d'entraînement (6) pour faire balayer, par ces moyens d'analyse, le document (D) et des moyens pour déplacer pas à pas l'un par rapport à l'autre le document et les moyens d'analyse suivant la direction Y, entre deux balayages, caractérisé par le fait que les moyens de déplacement pas à pas (7) sont agencés pour assurer des pas de déplacement dont l'amplitude correspond à n lignes ; que les moyens d'analyse ou de restitution (R) comportent n . k organes élémentaires, chaque organe élémentaire correspondant à une ligne ; et qu'il comporte des moyens de commande (10) propres à faire traiter, à chaque balayage, p/k points par lignes, ces moyens de commande (10) étant agencés pour décaler, suivant la direction X, les points de chaque balayage suivant par rapport aux points du balayage précédent d'une distance i/k suivant la direction X, i étant la distance qui sépare deux points successifs d'une ligne divisée en p/k points.

5. Appareil selon la revendication 4, caractérisé par le fait que les moyens d'analyse ou de restitution (R) comprennent $\underline{k}$ barrettes d'organes d'analyse ou de restitution élémentaire notamment de diodes électroluminescentes, chaque barrette comportant une rangée de $\underline{n}$ organes élémentaires.

6. Appareil selon la revendication 5, caractérisé par le fait que les barrettes (b1,b2) sont disposées bout-à-bout par leur petite extrémité.

7. Appareil selon la revendication 5, caractérisé par le fait que les barrettes (b1,b2) sont juxtaposées suivant une zone d'extrémité (e)d'un de leurs bords longitudinaux, les rangées d'organes élémentaires étant décalées suivant la direction X.

8. Appareil selon l'une quelconque des revendications 4 à 7, caractérisé par le fait qu'il comporte deux mémoires (11,12) travaillant en alterné.

# Fig.1.

# Fig.2.

# Fig.3.

# Fig.4.

# Fig.6.

## Fig.5.